# EUROPÄISCHE PATENTSCHRIFT

(11) **EP 1 666 769 B1**
(45) Veröffentlichungstag und Bekanntmachung des Hinweises auf die Patenterteilung: **23.04.2008**
(21) Anmeldenummer: 05025305.3
(22) Anmeldetag: 19.11.2005
(51) Int. Cl.: F16H 55/18

(54) **Zahnrad**
Gear wheel
Roue dentée

(30) Priorität: 02.12.2004 DE 102004058178
(43) Veröffentlichungstag der Anmeldung: 07.06.2006
(73) Patentinhaber: MAN Nutzfahrzeuge Aktiengesellschaft, 80995 München (DE)
(72) Erfinder: Gerusel, Karsten, Dr.-Ing., 80689 München (DE); Fingerhut, Horst-Peter, Dipl.-Ing., 85229 Markt Indersdorf (DE)

(56) Entgegenhaltungen:
- GB-A- 1 458 171

## Beschreibung

Die Erfindung betrifft ein Zahnrad nach dem Oberbegriff des Patentanspruches 1.

Ein derartiges Zahnrad ist aus DE 100 58 482 A1 bekannt. Das bekannte Zahnrad beinhaltet zwei um eine gemeinsame Achse drehbare Radteile, die drehmomentschlüssig miteinander verbunden sind, und bei einer Drehmomentübertragung im Einbauzustand in einem Zahnradgetriebe in Umfangsrichtung gegeneinander verspannt sind. Hierdurch wird Getrieberasseln, bei Drehmomenten, mit Vorzeichenwechsel, welches dann aufgrund von Zahnflankenspiel auftreten kann, vermieden. Das Zahnflankenspiel ist aus Fertigungsgründen und wegen abzudeckender Temperaturunterschiede bei Betriebsbeginn (Kaltstart) und beim Betrieb erforderlich. Insbesondere Steuerrädertriebe für die Ventilsteuerung von Dieselmotoren für Nutzfahrzeuge müssen ein Zahnflankenspiel aufweisen.

Zur Vermeidung der hieraus resultierenden Rasselgeräusche sind beim bekannten Zahnrad die beiden Radteile untereinander durch elastische und eine innere Dämpfung aufweisende Mittel drehmomentschlüssig miteinander verbunden. Durch Verdrehen der beiden Radteile um einen vorgegebenen Betrag im Montagezustand wird durch die elastischen Mittel, beispielsweise in Form eines Elastomers die im Einbauzustand erwünschte Vorspannung erzeugt.

Aus US 4,660,432 ist es bekannt, mit Hilfe von in einem der Radteile eingeschraubten Schrauben, die in abgeschrägte Löcher des anderen Radteiles eingreifen, im Montagezustand die beiden Radteile gegen die Rückstellkraft von zwischengelegten elastischen Mitteln gegeneinander zu verdrehen. Dadurch wird die in Umgangsrichtung erzeugte Vorspannung bis zum Einbauzustand im Zahnradgetriebe aufrechterhalten. Nach Herstellung des Einbauzustandes im Zahnradgetriebe werden die Schrauben entfernt.

Die Herstellung der Verspannung der beiden Radteile in Umfangsrichtung ist daher relativ aufwendig.

Ein Zahnrad gemäß dem Oberbegriff des Anspruchs 1 ist aus GB 1 458 171 bekannt.

Aufgabe der Erfindung ist es, ein Zahnrad der eingangs genannten Art zu schaffen, welches mit geringem Aufwand hergestellt werden kann.

Diese Aufgabe wird erfindungsgemäß durch die kennzeichnenden Merkmale des Patentanspruches 1 gelöst, wobei in den Unteransprüchen vorteilhafte Weiterbildungen der Erfindung angegeben sind.

Bei der Erfindung haben die beiden Radteile außen auf einer zylindrischen Mantelfläche eine Geradverzahnung und sind durch in axialer Richtung entlang einer axialen Verspannungsstrecke wirkende Federkraft, welche in einfacher Weise mittels einer oder mehreren Tellerfedern hergestellt werden kann, gegeneinander verspannt. Im Einbauzustand, insbesondere in einem Zahnradgetriebe ist wenigstens eines der beiden Radteile an seinem Innenumfang entlang der axialen Verspannungsstrecke durch eine Bewegungsführung geführt, welche gegenüber der axialen Richtung, welche parallel zur gemeinsamen Achse der beiden Radteile verläuft, einen Schrägungswinkel aufweist. Hierzu ist das wenigstens eine der beiden Radteile innerhalb der axialen Verspannungsstrecke in axialer Richtung verschiebbar gelagert. Durch die Verschiebung des mindestens einen Radteils wird ein geringes Verdrehen dieses Radteils gegenüber dem anderen Radteil erreicht, so dass ein vorhandenes Flankenspiel ausgeglichen wird und so bei Drehmomentenwechsel kein Rasseln oder Klappern mehr auftreten kann.

Bei der Montage des Zahnrades ist es erforderlich, das mindestens eine verschiebbare Radteil an das andere Radteil kurzzeitig zu verspannen, so dass die Außenverzahnung nicht versetzt ist und die beiden Radteile durch das Flankenspiel leicht in den Eingriff mit den vorgesehenen Rädern zu bringen ist. Danach kann die axiale Verspannung gelöst werden, wodurch dann sich das mindestens eine verschiebbare Rad auf der Bewegungsführung selbständig durch die Federkraft so lange axial bewegt, bis das Flankenspiel ausgeglichen ist.

Vorzugsweise besitzen die beiden Radteile eine identisch ausgebildete Geradverzahnung. Im Einbauzustand wird aufgrund des Schrägungswinkels der Bewegungsführung die in axialer Richtung wirkende Federkraft in die in Umfangsrichtung wirkende Gegeneinanderverspannung der beiden Radteile umgesetzt. Auf diese Weise wird ein Zahnflankenschlagen bei wechselnden Drehmomenten und bei schwellenden Drehmomenten vermieden.

Die Bewegungsführung wird in bevorzugter Weise von zwei ineinandergreifenden Keilverzahnungen gebildet, die im Schrägungswinkel beweglich zueinander angeordnet sind. Die Keilverzahnungen sind vorzugsweise als um die gemeinsame Achse angeordnete Keilzahnkränze ausgebildet.

Zur Ausbildung des Zahnrades als Zwischenrad in einem Zahnradgetriebe können die beiden Radteile und die Bewegungsführung auf einer in einem Gehäuse drehbar gelagerten Achse, beispielsweise mittels Wälzlager oder Gleitlager, gelagert sein.

An dieser Stelle sei noch erwähnt, dass in Zahnradgetrieben die Achsen oder Wellen der Zahnräder nicht nur genau im Achsabstand, sondern auch möglichst steif gelagert sein müssen. Weiterhin ist bei Nutzfahrzeugdieselmotoren der Antrieb der Ventilsteuerung oft an der vorderen Stirnseite des Dieselmotors angeordnet. Dadurch sind die Zahnräder in diesen Fällen alle fliegend gelagert. Hierbei ist es besonders wichtig, dass z. B. eine drehbare Achse, auf dem das axial geteilte Zahnrad, als z. B. Zwischenrad, wie beschrieben, gelagert ist, eine steife Lagerung im Gehäuse aufweisen. Die genannte Achse muss deshalb exakt und steif über ein Festlager und ein Loslager z. B. im Kurbelgehäuse des Dieselmotors gelagert sein.

Bei der Drehmomentübertragung mit Hilfe einer Welle, muss die Welle in einem Gehäuse entsprechend gelagert sein, z. B. mittels zweier Lagerstellen in bekannter Weise mit Fest- und Loslager. An dieser Welle kann entweder das Drehmoment an dem axial geteilten Zahnrad eingeleitet oder ausgeleitet werden. Die Ausführung des geteilten Zahnrades muss deshalb grundsätzlich nicht verändert werden.

Die Erfindung eignet sich insbesondere in Steuerrädertrieben für Motore und in Getrieben, bei denen schwellende und wechselnde Drehmomente auftreten.

Anhand der Zeichnung wird an Ausführungsbeispielen die Erfindung noch näher erläutert.

Es zeigt
- Fig. 1: in schnittbildlicher Darstellung ein erstes Ausführungsbeispiel der Erfindung;
- Fig. 2: in perspektivischer Darstellung eine Welle oder Achse, welche beim Ausführungsbeispiel der Fig. 1 zur Anwendung kommt;
- Fig. 3: in schnittbildlicher Darstellung ein zweites Ausführungsbeispiel der Erfindung;
- Fig. 4: in perspektivischer Darstellung eine Welle oder Achse, welche beim Ausführungsbeispiel der Fig. 3 zur Anwendung kommt;
- Fig. 5: eine perspektivische Darstellung der beiden Radteile des Zahnrades, und
- Fig. 6: eine schematische Darstellung zur Erläuterung der Wirkungsweise der Erfindung.

Die in den Figuren dargestellten Ausführungsbeispiele zeigen Zahnräder 10, von denen jedes wenigstens zwei um eine gemeinsame Achse 13 drehbare Radteile 11, 12 aufweist. Die beiden Radteile 11, 12 sind durch eine in axialer Richtung wirkende Federkraft entlang einer axialen Verspannungsstrecke V gegeneinander verspannt. Zur Erzeugung der axial wirkenden Federkraft sind zwei Tellerfedern 14 vorgesehen, die in entgegengesetzten axialen Richtungen auf die beiden Radteile 11, 12 wirken. Die beiden Tellerfedern 14 sind hierzu aneinander abgestützt. Die beiden Radteile 11, 12 weisen Geradverzahnungen 15a, 15b an außen liegenden kreiszylindrischen Mantelflächen auf.

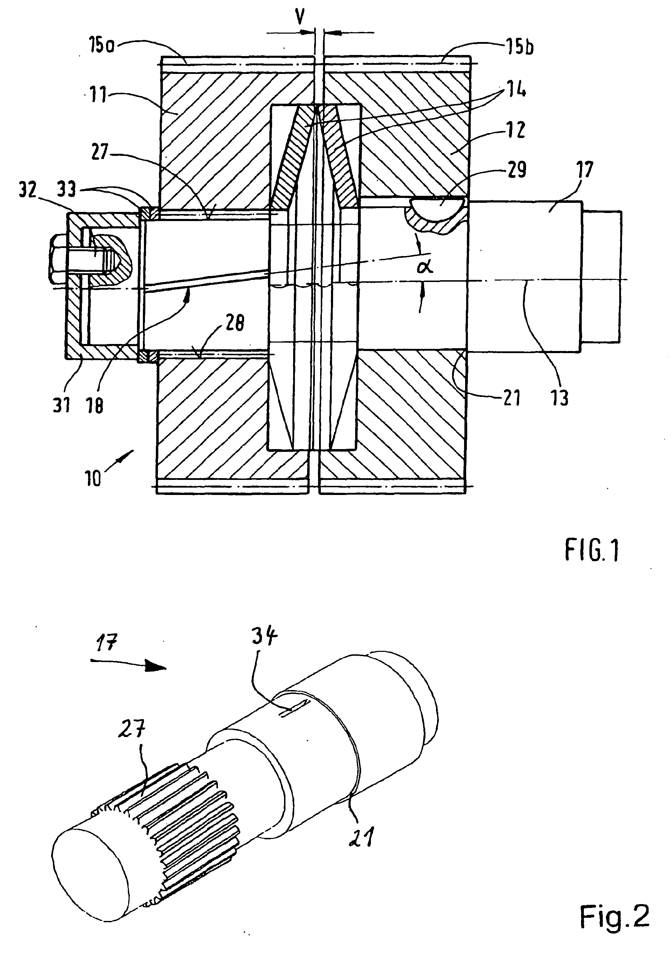

Bei der in Fig. 1 dargestellten Außenverzahnung 27 (Fig. 2) auf der Achse 17 oder Welle 17 muss die Passfeder 29 bzw. Passfedernut 34 eine abgestimmte Stellung zur Außenverzahnung 27 haben. Ebenso müssen die beiden Radteile 11, 12 in den Formführungen innen eine definierte Zuordnung zu den Außenverzahnungen 15a, 15b haben, so dass bei einem Abstand von V = 0 die Außenverzahnungen 15a und 15b keinen Versatz zueinander haben. Der Versatz der beiden Radteile 11, 12 darf erst dann auftreten, wenn der Abstand V > 0 (V größer als Null) ist, der durch die Tellerfedern 14, bzw. durch deren Federkraft, im eingebauten Zustand durch das vorhandene Flankenspiel erzeugt wird.

Für den Einbau ist eine Möglichkeit vorzusehen, die beiden Räder 11, 12 einmal axial vorzuspannen, so dass die Räder 11, 12 spannungsfrei eingebaut werden können.

Aus den genannten Gründen, die Zuordnung der Verzahnungen 15a, 15b zur Führung auf der Achse 17 bzw. Welle 17, sollten Ersatzteile nur als zusammengebautes Zahnrad 10 einschließlich Achse 17 oder Welle 17 zur Verfügung stehen.

Die Begrenzung der axial möglichen Bewegung ist einerseits durch eine Anschlagfläche 21 und andernendes durch eine Buchse 31 oder Scheibe 31 (nicht gez.) und durch eine oder mehrere Passscheiben 33 und die axiale Verschraubung mit einer Schraube 32 gegeben.

Weiterhin kann die axiale Verspannkraft durch die Anzahl und Anordnung der Tellerfedern 14 verändert werden. Die dargestellte Anordnung der Tellerfedern 14 ist die "weichste" Anordnung von zwei Tellerfedern 14.

Wenn man die Tellerfedern 14 hintereinander anordnet, so dass sie in der Form ineinander liegen, so wird die Axialkraft verdoppelt. Wenn man nur eine Tellerfeder 14 verwendet, so wird eine harte Verstellung, also ein starker Anstieg der Axialkraft pro Wegeinheit V, erreicht.

Die Anordnung des Rades 10 auf der Achse 17 oder Welle 17 ist, bis auf die Forderung der Übertragung von Drehmomenten bei der Welle 17, gleich.

Wenn das Zahnrad 10 ein Zwischenrad, z. B. in einem Steuerrädergetriebe, ist, so ist die Achse 17 in einem Gehäuse, z. B. dem Kurbelgehäuse an zwei Stellen (Loslager, Festlager) genau und steif zu lagern. Die Achse 17 muss in der Lage sein, z. B. Schwingungen aus dem Zahnradtrieb ohne Probleme aufzunehmen. Zur Fixierung des Radteiles 12 genügt z. B. eine Passfeder 29, es können aber auch drei Passfedern am Umfang der Achse 17 sein.

Die Fig. 2 zeigt eine bevorzugte Achsausführung von Fig. 1. Die Passfedernut 34 muss der Keilverzahnung 27 zugeordnet sein. Die Keil- oder Kerbverzahnung 27, 28 ist eine Schrägverzahnung.

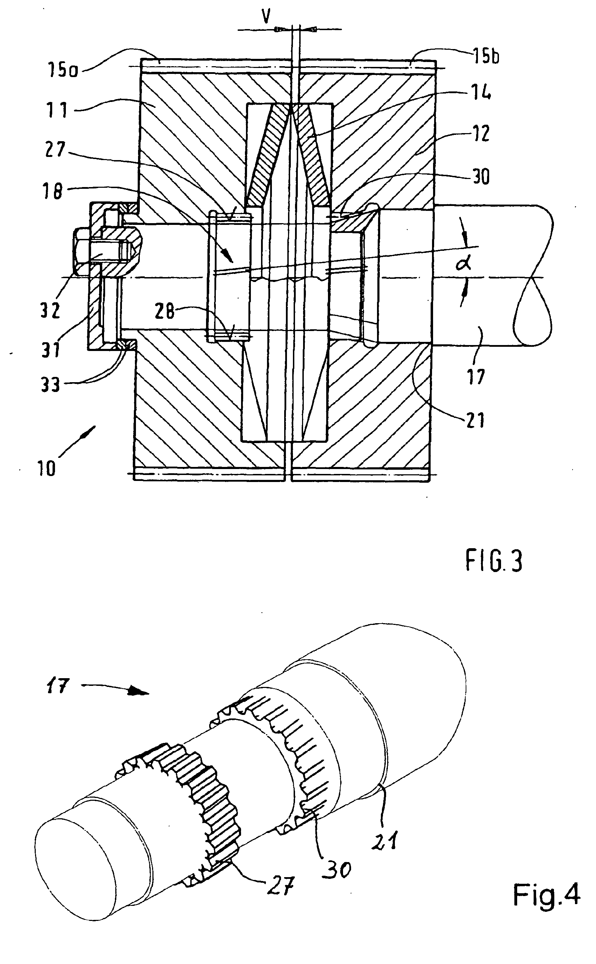

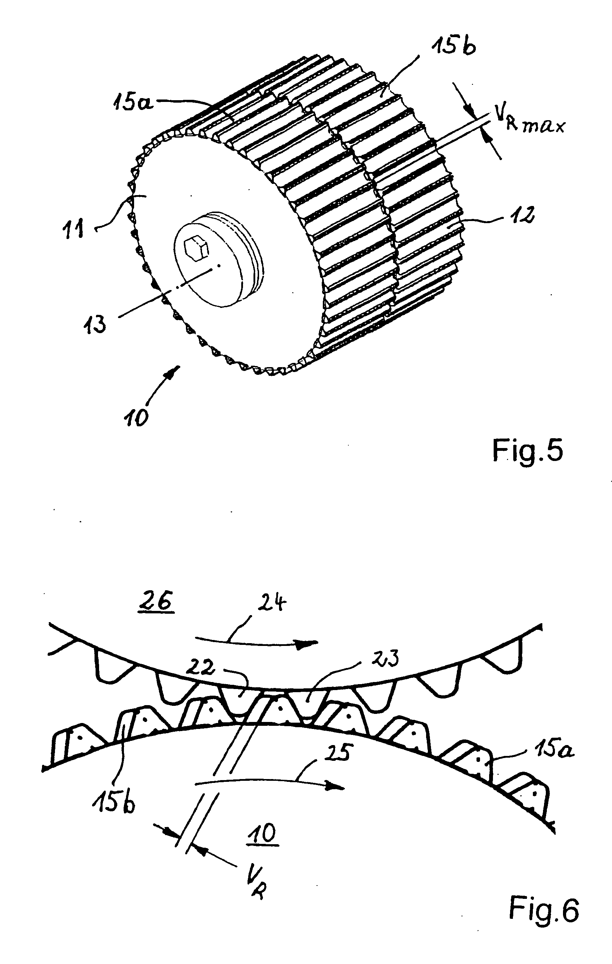

Die Fig. 3 zeigt eine vorzugsweise Ausführung einer Antriebswelle 17. Beide Radteile 11, 12 greifen in eine gemeinsam gefertigte Keil- oder Kerbverzahnung 27, 30 ein. Vorteil dieser Ausgestaltung ist, dass es keinen ungewollten Versatz zwischen der Verzahnung 27 und der Verzahnung 30 gibt. Nur die Innenverzahnungen der Radteile 11, 12 müssen einander so zugeordnet sein, dass bei einem horizontalen Versatz V = 0 die Außenverzahnung 15a, 15b keinen oder keinen nennenswerten radialen Versatz V_{R} (Fig. 6) hat.

Die Antriebswelle 17 kann z. b. als Antrieb eines Hubkolbenluftkompressors dienen, bei dem durch Restluft im Hubraum des Kompressors vor jedem Arbeitstakt ein Wechselmoment im Antrieb entsteht. Die Verzahnung 27,30 und die entsprechende Gegenverzahnung ist gut zur Übertragung von Drehmomenten.

Die Fig. 4 zeigt die Antriebswelle 17 von Fig. 3. Die Keil- oder Kerbverzahnung 27 und 30 ist gemeinsam gefertigt und weist eine Steigung unter dem Winkel α auf, Fig. 3. Der Winkel α ist vorzugsweise zwischen 5 ° und 8 °.

Die Fig. 5 zeigt ein geteiltes Zahnrad 10 in perspektivischer Ansicht. Der Versatz der Zähne V_{Rmax} stellt sich ein, abhängig von der Steigung α auf der Achse 17 oder Welle 17 und abhängig von der vorgegebenen axialen Verschiebung V. Der vorgegebene Versatz der Zähne V_{Rmax} muss größer sein, als alle möglichen Flankenspiele von Zahnradpaarungen und alle zulässigen Achsabstandstoleranzen, sodass im Betrieb die Außenverzahnungen 15a, 15b immer ein sich einstellendes Zahnflankenspiel ausgleichen. Bei zusammengedrückten Radteilen 11, 12, wenn also V = 0 ist, muss der radiale Versatz V_{R} ebenfalls null sein.

Der axiale Abstand V im eingebauten Zustand des Rades 10 stellt sich ein, abhängig vom Zahnflankenspiel und der Steigung α der Verzahnung 27 auf der Achse 17 oder Welle 17 bzw. der Verzahnung 27, 28 im Innendurchmesser des Rades 11.

Die Fig. 6 zeigt schematisch den Eingriff zweier Zahnräder, einem Zahnrad 26 und dem erfindungsgemäßen Zahnrad 10. Die genannten Zahnräder sind geradverzahnt. Durch das erforderliche Flankenspiel, das der radialen Verdrehung V_{R} entspricht, werden über die axiale Verschiebung V und der Steigung α der Keil- oder Kerbverzahnung 27, 30 auf der Achse 17 oder Welle 17, die beiden Radteile 11, 12 zueinander verdreht, so dass es kein Flankenspiel mehr gibt. Wenn Betriebsbedingungen, z. B. eine Erwärmung der Brennkraftmaschine, eine Änderung des Flankenspieles zur Folge haben, so stellt sich über die Bewegungsführung 18 ein neuer radialer Versatz V_{R} ein, der das neue Flankenspiel ausgleicht.

### Bezugszeichenliste:

- 10: Zahnrad, geradverzahnt
- 11,12: Radteile
- 13: gemeinsame Achsmitte
- 14: Tellerfeder
- 15a,15b: Geradverzahnungen
- 17: drehbare Achse oder Welle
- 18: schräge Bewegungsführung
- 21: axialer Anschlag
- 22, 23: benachbarte Zähne
- 24,25: Drehrichtung von Zahnrädern
- 26: Getriebezahnrad
- 27,28: Keilverzahnungen oder Kerbverzahnungen
- 29: Scheibenfeder
- 30: Keilverzahnung oder Kerbverzahnung
- 31: Buchse oder Scheibe
- 32: Befestigungsschraube
- 33: Passscheiben
- 34: Scheibenfedernut
- V: axialer Versatz
- V_{Rmax}: radialer Versatz, maximal
- V_{R}: radialer Versatz im Betrieb
- α: Schrägungswinkel der Keil- oder Kerbverzahnung

## Patentansprüche

1. Zahnrad mit wenigstens zwei um eine gemeinsame Achsmitte oder Wellenmitte drehbaren Radteilen mit Geradverzahnungen, welche drehmomentschlüssig miteinander verbunden sind und in Umfangrichtung gegeneinander verspannt sind wobei die beiden Radteile (11, 12) durch eine in axialer Richtung wirkende Federkraft entlang einer axialen Verspannungsstrecke (V), sich gegeneinander geringfügig verdrehen, wobei am Innenumfang wenigstens eines der beiden Radteile (11,12) entlang der axialen Verspannungsstrecke (V) eine Bewegungsführung (18) vorgesehen ist, die gegenüber einer zur gemeinsamen Achsmitte (13) oder Wellenmitte (13) parallelen Richtung einen Schrägungswinkel (α) aufweist,
**dadurch gekennzeichnet, dass** die beiden Radteile (11, 12) über ihre Formführungen innen in eine gemeinsame Achse (17) oder Welle (17) eingreifen, wobei ein Radteil (11) innen über eine Schrägverzahnung mit der Achse oder Welle in Wirkverbindung steht und das zweite Radteil (12) innen über eine Passfederverbindung oder eine Schrägverzahnung mit der Achse oder Welle (17) in Wirkverbindung steht.

2. Zahnrad nach Anspruch 1, **dadurch gekennzeichnet, dass** wenigstens einer der beiden Radteile (11, 12) innerhalb der axialen Verspannungsstrecke (V) in axialer Richtung verschiebbar gelagert ist und das andere Radteil in axialer Richtung ortsfest angeordnet ist.

3. Zahnrad nach Anspruch 1 oder 2, **dadurch gekennzeichnet, dass** die in axialer Richtung wirkende Federkraft durch wenigstens eine Tellerfeder (14), die um die gemeinsame Achsmitte oder Wellenmitte (13) angeordnet ist, gebildet ist.

4. Zahnrad nach einem der Ansprüche 1 bis 3, **dadurch gekennzeichnet, dass** zwei aneinander abgestützte Tellerfedern (14), die in entgegengesetzten axialen Richtungen auf die beiden Radteile (11, 12) wirken, vorgesehen sind.

5. Zahnrad nach einem der Ansprüche 1 bis 4, **dadurch gekennzeichnet, dass** die beiden Radteile (11, 12) als Zwischenrad eines Zahnradgetriebes ausgebildet sind.

6. Zahnrad nach einem der Ansprüche 1 bis 4, **dadurch gekennzeichnet, dass** die beiden Radteile (11, 12) drehfest mit einer um die gemeinsame Achsmitte (13) drehbaren Welle (17;34) verbunden sind.

7. Zahnrad nach einem der Ansprüche 1 bis 6, **dadurch gekennzeichnet, dass** die Länge der axialen Verspannungsstrecke (V) derart bemessen ist, dass bei vorgegebenem Zahnflankenspiel (V_{R}) die Radteile (11, 12) in eingebautem Zustand in Umgangsrichtung vorgespannt sind.

8. Zahnrad nach einem der Ansprüche 1 bis 7, **dadurch gekennzeichnet, dass** die schräge Bewegungsführung (18) des wenigstens einen Radteils (11,12) zwei gegenüber der Achsmitte (13) den Schrägungswinkel (α) aufweisende Keilverzahnungen (27, 28), die im Schrägungswinkel beweglich zueinander sind, aufweist.

9. Zahnrad nach einem der Ansprüche 1 bis 8, **dadurch gekennzeichnet, dass** der Schrägungswinkel (α) 3° bis 10°, insbesondere 5° bis 6° aufweist.

10. Zahnrad nach einem der Ansprüche 1 bis 9, **dadurch gekennzeichnet, dass** die Bewegungsführung (18) eine an der Welle (17;34) vorgesehene Keilverzahnung (27) sowie eine an dem Innenumfang des axial beweglichen Radteiles (11, 12) vorgesehene Keilverzahnung (28), welche in die an der Welle (17) vorgesehene Keilverzahnung (27, 30) mit dem Schrägungswinkel (α) verschiebbar eingreift, aufweist.

11. Zahnrad nach einem der Ansprüche 1 bis 10, **gekennzeichnet durch** seine für den Einbau in ein Schaltgetriebe angepasste Ausbildung.

12. Zahnrad nach einem der Ansprüche 1 bis 11, **gekennzeichnet durch** seine für den Einbau in einem Steuerrädertrieb einer Verbrennungskraftmaschine, insbesondere eines Dieselmotors, angepasste Ausbildung.

## Claims

1. Gear wheel with at least two wheel parts with straight teeth revolving around a common axle or shaft centre, which are connected to each other in a torque-locking manner and braced against each other in circumferential direction, whereby the two wheel parts (11, 12) twist slightly against each other through a spring force acting in an axial direction along an axial bracing gap (V), whereby in the interior circumference of at least one of the two wheel parts (11, 12) a movement guide (18) is provided for along the axial bracing gap (V), which movement guide (18) features an angle (α) in relation to a direction that is parallel to a common axle centre (13) or shaft centre (13),
**characterised in that** both wheel parts (11, 12) protrude on the inside by way of their form guidance into a common axle (17) or shaft (17), whereby one wheel part (11) maintains an effective connection with the axle or shaft on the inside through helical gearing and the second wheel part (12) maintains an effective connection with the axle or shaft (17) on the inside via a feather key or helical gear wheel.

2. Gear wheel as per Claim 1, **characterised in that** at least one of the two wheel parts (11, 12) is mounted and movable in axial direction within the axial bracing gap (V) and that the other wheel part is fixed in axial direction.

3. Gear wheel as per Claim 1 or 2, **characterised in that** the spring force acting in axial direction is composed of at least one disc spring (14) located around the common axle or shaft centre (13).

4. Gear wheel as per one of the Claims 1 to 3, **characterised in that** two disc springs (14) are provided which are braced against each other and act on the two wheel parts (11, 12) in opposite axial directions.

5. Gear wheel as per one of the Claims 1 to 4, **characterised in that** the two wheel parts (11, 12) are designed as an intermediate gear of a gear transmission.

6. Gear wheel as per one of the Claims 1 to 4, **characterised in that** the two wheel parts (11,12) are connected in connected with a shaft (17;34) pivotable about the common axle centre (13) in such a way that they do not turn.

7. Gear wheel as per one of the Claims 1 to 6, **characterised in that** the length of the axial bracing gap (V) is dimensioned such that at a given tooth flank play (V_{R}), the wheel parts (11, 12) are pre-stressed in circumferential direction when built in.

8. Gear wheel as per one of the Claims 1 to 7, **characterised in that** the inclined movement guide (18) of the at least one wheel part (11, 12) features two splines (27, 28) at an angle (α) relative to the axle centre (13), which splines (27, 28) are movable relative to each other within said angle.

9. Gear wheel as per one of the Claims 1 to 8, **characterised in that** the angle (α) is 3° to 10°, and especially 5° to 6°.

10. Gear wheel as per one of the Claims 1 to 9, **characterised in that** the movement guide (18) features a spline (27) located on the shaft (17; 34), as well as a spline (28) in the inner circumference of the axially movable wheel part (11, 12), which spline (28) protrudes in an adjustable manner at the angle (α) into the spline (27, 30) provided on the shaft (17).

11. Gear wheel as per one of the Claims 1 to 10, **characterised by** a design that is adapted for installation into a manual transmission.

12. Gear wheel as per one of the Claims 1 to 11, **characterised in that** its design is adapted for installation into the timing gears of an internal combustion engine, particularly a diesel engine.

## Revendications

1. Roue dentée comprenant au moins deux parties de roue rotatives autour d'un centre d'axe ou d'un centre d'arbre commun, avec dentures droites, lesquelles sont raccordées entre elles par adhérence du couple et sont contraintes l'une contre l'autre en direction circonférentielle, auquel cas les deux parties de roue (11, 12) se tordent légèrement l'une contre l'autre en raison d'une force de ressort agissant en direction axiale le long d'une trajectoire de contrainte axiale (V), auquel cas un guidage de mouvement (18) est prévu sur la circonférence intérieure au moins de l'une des deux roues (11, 12) le long de la trajectoire de contrainte axiale (V), ce guidage de mouvement présentant un angle d'hélice (α) par rapport à une direction parallèle au centre d'axe (13) ou au centre d'arbre commun (13),
**caractérisée en ce que** les deux parties de roue (11, 12) ont prise à l'intérieur dans un axe (17) ou un arbre (17) commun par l'intermédiaire de leurs formes, auquel cas une partie de roue (11) est liée directement, à l'intérieur, avec l'axe ou l'arbre par l'intermédiaire d'une denture hélicoïdale et la seconde partie de roue (12) est liée directement, à l'intérieur, avec l'axe ou l'arbre (17) par l'intermédiaire d'une liaison à ressort d'ajustage ou d'une denture hélicoïdale.

2. Roue dentée selon la revendication 1, **caractérisée en ce qu'**au moins une des deux parties de roue (11,12) est logée de manière déplaçable en direction axiale à l'intérieur de la trajectoire de contrainte axiale (V) et **en ce que** l'autre partie de roue est disposée de manière stationnaire en direction axiale.

3. Roue dentée selon la revendication 1 ou 2, **caractérisée en ce que** la force de ressort agissant en direction axiale est formée d'au moins un ressort à disque (14) disposé autour du centre d'axe ou du centre d'arbre (13) commun.

4. Roue dentée selon l'une des revendications 1 à 3, **caractérisée en ce que** sont prévus deux ressorts à disque (14) s'appuyant l'un contre l'autre et agissant sur les deux parties de roue (11, 12) dans des directions axiales opposées.

5. Roue dentée selon l'une des revendications 1 à 4, **caractérisée en ce que** les deux parties de roue (11, 12) sont exécutées en tant que pignon intermédiaire faisant partie d'un train d'engrenages.

6. Roue dentée selon l'une des revendications 1 à 4, **caractérisée en ce que** les deux parties de roue (11, 12) sont raccordées, de manière résistante à la torsion, à un arbre (17 ; 34) pivotant autour du milieu d'axe (13) commun.

7. Roue dentée selon l'une des revendications 1 à 6, **caractérisée en ce que** la longueur de la trajectoire de contrainte axiale (V) est dimensionnée de telle manière que, lorsque le jeu de profil de dent (V_{R}) est prédéfini, les parties de roue (11, 12) sont précontraintes à l'état monté en direction circonférentielle.

8. Roue dentée selon l'une des revendications 1 à 7, **caractérisée en ce que** le guidage de mouvement (18) incliné d'au moins une partie de roue (11, 12) présente deux dentures en coin (27, 28) présentant l'angle d'hélice (α) par rapport au milieu d'axe (13), ces dentures en coin étant déplaçables l'une par rapport à l'autre dans l'angle d'hélice.

9. Roue dentée selon l'une des revendications 1 à 8, **caractérisée en ce que** l'angle d'hélice (α) se situe entre 3° et 10° et, en particulier, entre 5° et 6°.

10. Roue dentée selon l'une des revendications 1 à 9, **caractérisée en ce que** le guidage de mouvement (18) présente une denture en coin (27) prévue sur l'arbre (17 ; 34) ainsi qu'une denture en coin (28) prévue sur la circonférence intérieure de la partie de roue (11, 12) déplaçable en direction axiale, laquelle denture en coin a prise dans la denture en coin (27, 30) prévue sur l'arbre (17), de manière déplaçable selon l'angle d'hélice (α).

11. Roue dentée selon l'une des revendications 1 à 10, **caractérisée par** son exécution adaptée au montage dans une boîte de vitesses manuelle.

12. Roue dentée selon l'une des revendications 1 à 11, **caractérisée par** son exécution adaptée au montage dans un train d'engrenages de distribution d'un moteur à combustion interne, en particulier d'un moteur diesel.
